(19) Europäisches Patentamt
European Patent Office
Office européen des brevets

(11) **EP 2 495 214 A2**

(12) **EUROPÄISCHE PATENTANMELDUNG**

(43) Veröffentlichungstag:
**05.09.2012 Patentblatt 2012/36**

(21) Anmeldenummer: **11004864.2**

(22) Anmeldetag: **15.06.2011**

(51) Int Cl.:
*C01B 3/38* (2006.01)    *C01B 3/48* (2006.01)
*B01J 8/04* (2006.01)    *B01J 8/06* (2006.01)
*F23D 14/02* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **04.03.2011 DE 102011013026**

(71) Anmelder: **DBI- Gastechnologisches Institut
gGmbH Freiberg
09599 Freiberg (DE)**

(72) Erfinder:
• **Otto, Bert**
   **08371 Glauchau (DE)**
• **Nitzsche, Jörg Dr.-Ing.**
   **09599 Freiberg (DE)**
• **Krause, Hartmut Dr.-Ing**
   **09599 Freiberg (DE)**
• **Grosser, Katrin Dr.-Ing.**
   **04895 Falkenberg/Elster (DE)**

(74) Vertreter: **Reimann, Wolfgang
Pekrunstrasse 62
12685 Berlin (DE)**

(54) **Verfahren und Anordnung zur Dampfreformierung kohlenwasserstoffhaltiger Gase**

(57) Verfahren und kompakte Anordnung zur Erzeugung von wasserstoffreichen Gasgemischen aus Kohlenwasserstoffen (0.2) wobei die kompakte Anordnung einen schalenförmigen Aufbau besitzt, welcher bewirkt, dass die Temperaturen nach außen hin abnehmen, so dass im Kern des Reaktors die höchsten Temperaturen, durch den Prozess der Verbrennung und Reformierung, und am Rand die niedrigsten Temperaturen vorherrschen und die Anordnung eine innere Wärmedämmung aufweist, so dass heiße Bereiche des Reaktors von kühleren getrennt werden und die Reformierreaktion in Doppelrohrlanzen stattfindet, wobei der Reaktionsbereich in zwei Zonen, welche nacheinander durchströmt werden, aufgeteilt ist.

Die kompakte Anordnung besitzt einen Mehrstoffbrenner zur sicheren thermischen Umsetzung von kohlenwasserstoff- und wasserstoffhaltigen Gasen. In diesem Mehrstoffbrenner werden schnell brennende Gase, wie beispielsweise Wasserstoff getrennt vom Oxidationsmittel und langsam brennende Gase, wie beispielsweise Kohlenwasserstoffe in einer Mischung mit Oxidationsmittel in den Brennraum eingebracht und die Umschaltung zwischen verschiedenartigen Brennstoffen derart geschieht, dass keine Verzögerungen im Betrieb auftreten und ohne Unterbrechung eine Flamme ausgebildet wird, wodurch auch spontan auftretende Gase im Prozess sicher mit dem Verfahren und der Anordnung umgesetzt werden können, weshalb ein Einsatz von Nachbrennern erspart werden kann. Es folgt eine Seite Zeichnungen:

EP 2 495 214 A2

## Beschreibung

Gegenstand der Erfindung ist eine kompakte, verfahrenstechnisch optimierte Dampf-Reformiereinheit zur Erzeugung von wasserstoffreichem Synthesegas aus kohlenwasserstoffreichen Ausgangsstoffen und ein Verfahren zum Betrieb dieser Einheit. Gegenstand der Erfindung ist ebenfalls ein integrierter Mehrstoffbrenner zur Lieferung von Prozesswärme und sicheren Umsetzung aller im Prozess anfallenden Gase. Die Erfindung kann beispielsweiße zur Bereitstellung von Wasserstoff für den Betrieb eines Brennstoffzellen-BHKW verwendet werden. Denkbar ist auch eine Anwendung als Komponente einer Wasserstofftankstelle. Die Größe der Reformiereinheit ist skalierbar und für spezielle Anwendungsfälle anpassbar.

Aus der Literatur sind zahlreiche Apparate bekannt, welche das Verfahren der Dampfreformierung nutzen, um kohlenwasserstoffreiche Ausgangsstoffe in Wasserstoff, Kohlenstoffmonoxid und Kohlenstoffdioxid aufzuspalten. Der Wasserstoff wird dann in reiner oder gemischter Form meist in Brennstoffzellen verwendet.

Dampfreformierung beschreibt einen Prozess, bei dem mit Hilfe von Katalysatoren Kohlenwasserstoffe und Wasserdampf zu Wasserstoff, Kohlenmonoxid und Kohlendioxid umgewandelt werden. Dabei laufen folgende Reaktionen ab:

$$C_n H_m + n H_2 O \rightarrow n CO + \left( n + \frac{m}{2} \right) H_2 \qquad \Delta_R H^0 \gg 0 \text{ kJ/mol} \qquad (1)$$

$$CH_4 + H_2 O \leftrightarrow CO + 3 H_2 \qquad \Delta_R H^0 = 165 \text{ kJ/mol} \qquad (2)$$

$$CH_4 + 2 H_2 O \leftrightarrow CO_2 + 4 H_2 \qquad \Delta_R H^0 = 206 \text{ kJ/mol} \qquad (3)$$

$$CO + H_2 O \leftrightarrow CO_2 + H_2 \qquad \Delta_R H^0 = -41 \text{ kJ/mol} \qquad (4)$$

Die Reaktionen sind thermodynamisch limitiert. Um eine möglichst hohe Ausbeute an Wasserstoff und einen geringen Restgehalt an Methan im Produktgas zu haben, sind S/C (steam to carbon ratio - molares Dampf-Kohlenstoff-Verhältnis)-Werte von 2,5 - 6 und Temperaturen von 600 - 900°C nötig. Die Anwendungsdrücke variieren von Umgebungsdruck bis 10,0 MPa.

Da die Dampfreformierung von Kohlenwasserstoffen nach (1) stark endotherm ist, muss dem Prozess Wärme zugeführt werden. Diese wird üblicherweise dem Rauchgas von Verbrennungsprozessen durch Strahlung und Konvektion entzogen. Ein guter Wärmeübergang zwischen Rauchgas und der Reaktionszone wirkt sich positiv auf den Wirkungsgrad der Dampfreformierung aus.

Das bei der Dampfreformierung entstehende Kohlenstoffmonoxid ist in einigen nachgeschalteten Prozessen (beispielsweise PEM-Brennstoffzellen) schädlich und muss entfernt werden. Dazu wird nach der Reformierung eine Gasreinigung angeschlossen, welche mit Hilfe von Katalysatoren Kohlenstoffmonoxid mit Wasserdampf nach (4) in Kohlenstoffdioxid umwandelt. Diese Reaktion wird üblicherweise Shift-Reaktion genannt.

Man unterscheidet allgemein eine Hochtemperatur- und eine Niedertemperatur-Shiftreaktion, welche sich durch das Niveau der Temperatur unterscheiden, auf dem der eingesetzte Katalysator den meisten Umsatz leistet. Aus der Literatur sind Reformer bekannt, welche eine Gasreinigungsstufe beinhalten und somit den Kohlenmonoxidgehalt des Produktgases auf unter 1 Vol.-% (trocken) senken.

Eine dem Stand der Technik entsprechende Einheit zur Dampfreformierung von kohlenwasserstoffhaltigen Gasen besteht im allgemeinen aus folgenden Komponenten:

| Tabelle 1: Beschreibung von Teilkomponenten in Dampfreformer-Systemen | |
|---|---|
| Komponente | Aufgabe |
| Entschwefelung | Entfernung von Schwefel aus den Edukten wie Erdgas, Biogas oder anderen Kohlenwasserstoffen |

(fortgesetzt)

| Tabelle *1*: Beschreibung von Teilkomponenten in Dampfreformer-Systemen | |
|---|---|
| **Komponente** | **Aufgabe** |
| Brenner, el. Beheizung | Zuführung von Prozesswärme |
| Shift | Verringerung des Kohlenmonoxidgehalts im Produktgas durch Wassergas-Shiftreaktion, (Hochtemperatur- und/oder Niedertemperatur-Shiftreaktion) |
| Verdampfer-Wärmeübertrager | Bereitstellung von Dampf für den Reformierbereich |
| Rauchgas-Wärmeübertrager | Brennwertnutzung des Rauchgases, Abgabe restlicher Prozesswärme z.B. an Heizungsanlage von Gebäuden |
| CO-Feinreinigungsstufe | Entfernung von kleinsten Mengen CO aus dem Produktgas entweder durch Zugabe von Luft (Selektive Oxidation) oder katalytische Umwandlung in $CH_4$ mit Wasserstoff (Methanisierung) |
| Konditionierung | Wärmeübertrager zum Herunterkühlen des heißen Produktgases von ca. 650...900°C auf ca. 200...380°C bei nachgeschalteter Gasreinigung |

Ziel der Konzeption einer kompakten Reformereinheit ist die intelligente Verschaltung der einzelnen, weiter oben genannten Komponenten, sodass möglichst wenig Wärmeverluste auftreten. Dadurch kann ein hoher Systemwirkungsgrad bei der Reformierung erreicht werden.

In Patentschrift DE 10 2004 010 910 B4 ist die Berechnung des Wirkungsgrades bei Dampfreformern dargelegt. Der im Patent offenbarte Reformer erreicht Wirkungsgrade von 85%, wobei zur Berechnung der chemische Enthalpiestrom des erzeugten Wasserstoffes durch die Summe der chemischen Enthalpien aus Produktgas und für die Beheizung notwendiges Heizgas geteilt wird.

Patentschrift DE 10 2006 019 409 A1 beschreibt einen Dampfreformer mit koaxial zur Reaktionszone angeordnetem Brenner. Die Wärme zur Verdampfung des Prozesswassers wird aus der Abwärme der Shiftreaktion bezogen. Restliche Abwärme aus dem Verbrennungsprozess wird zur weiteren Aufheizung der bereits verdampften Edukte genutzt. Somit kann im Reaktionsraum Energie gespart werden, weil die eintretenden Edukte bereits eine der Reformierreaktion entsprechenden Temperatur aufweisen. Die Wärmeübertrager sind in dieser Apparatur als Rohrwendel ausgeführt.

In der Patentschrift US 6 759 016 B2 ist ebenfalls ein kompakter Dampfreformer beschrieben, welcher intern erzeugte Wärme für Prozessschritte benutzt, welche einen Wärmeeintrag benötigen (z.B. Verdampfer). Zur Wärmeübertragung wird hier ebenfalls eine Rohrwendel verwendet, welche glatt, gewellt oder mit Lamellen versehen sein kann.

Patentschriften WO 03/024867 A1 und DE 197 216 30 beschreiben weitere Lösungen.

Die in der Literatur beschriebenen kompakten Reformer haben den Mangel, dass sie entweder nicht alle, für ein vollständiges Reformersystem benötigten Komponenten enthalten (siehe *Tabelle 1* 4) oder aber bei Vorhandensein aller notwendigen Komponenten die Fertigung sehr aufwendig ist. Eine aufwändige Fertigung hat zur Folge, dass der Endpreis des Produktes hoch sein wird. Außerdem lassen sich die zum Stand der Technik gehörenden vollständigen Reformersysteme schwer oder gar nicht in Serie produzieren, weil derart komplizierte Systeme nur von Hand hergestellt werden können. Einfacher aufgebaute Systeme beinhalten dagegen nicht alle notwendigen Prozessschritte und bedürfen weiterer vor- und nachgeschalteter Teilaggregate, welche bei Verschaltung höhere Wärme- und/oder Strömungsverluste hervorrufen.

Ein weiterer Mangel besteht in der Oxidationsanfälligkeit der verwendeten Nickelkatalysatoren für den Reformierbereich. Diese Katalysatoren werden bei Kontakt mit Oxidationsmitteln wie Luft oder Wasserdampf ganz oder teilweise oxidiert und verlieren dadurch ihre katalytische Wirksamkeit. Beim Einsatz dieser Apparate für Brennstoffzellen-BHKW treten während Aufheiz- und Abkühlvorgängen betriebs- und prozessbedingt Zustände auf, bei denen der Reformierkatalysator einer oxidierenden Atmosphäre bestehend aus Wasserdampf oder Luft ausgesetzt wird. Werden edelmetallhaltige Katalysatoren (z.B. Rhodium) verwendet, besteht dieses Problem nicht, jedoch erhöhen sich die Kosten für den Katalysator erheblich. Eine Reduktion und damit Reaktivierung des oxidierten Nickelkatalysators mit Kohlenwasserstoffen ist chemisch nicht oder nicht in ausreichendem Maß möglich.

Aufgabe der vorliegenden Erfindung ist ein verbessertes Verfahrens und eine kompakte, hochintegrierte Anlage zur Herstellung von wasserstoffreichem Synthesegas besonders im Hinblick auf Vollständigkeit des Systems bei gleichzeitig vereinfachter Fertigung sowie Vermeidung der Oxidierung der Reformierkatalysatoren bzw. deren Reaktivierung während der Betriebsphase.

Gelöst wird diese Aufgabe durch die nachfolgend im Detail beschriebene Anlage und des Verfahrens für deren Betrieb.

Die vorliegende Erfindung besteht aus einem bevorzugt zylinderförmigen Behälter, welcher in seiner Funktionsweise dafür vorgesehen ist, unter Zugabe von Wasser kohlenwasserstoffreiche Gase oder leicht flüchtige kohlenwasserstoffreiche Flüssigkeiten in einer endothermen Reaktion aufzuspalten und zu einem Gemisch aus Wasserstoff und Kohlendioxid zu wandeln. Bei der Reaktion anfallendes Kohlenmonoxid wird in einem nachgeschalteten internen Prozess unter weiterer Zugabe von Wasser zu Kohlendioxid gewandelt. Das resultierende Produktgas weist einen Kohlenmonoxidgehalt von unter 1 Vol.-% (trocken) auf.

Bestandteil der Erfindung ist ein erster Bereich zur Reformierung der Kohlenwasserstoffe, welcher als Anordnung von Reformerdoppelrohren ausgeführt ist. Bevorzugt bilden eins bis zehn Rohre diesen ersten Bereich, wobei vier Rohre besonders bevorzugt werden. Die Doppelrohre sind im Einzelnen derart aufgebaut, dass ein größeres Außenrohr mit einem Deckel einseitig verschlossen ist und auf der anderen Seite einen Einlass oder Auslass hat. Die Außenrohre haben einen Durchmesser zwischen 15 und 50 mm. Im Inneren des Rohres befindet sich ein weiteres kleineres Rohr, welches als Gaszu- oder Gasabführung dient. Beide Rohre bilden in ihrer Anordnung einen Ringspalt, welcher zum Heruntersetzen der Aktivierungsenergie der chemischen Reformierreaktion mit einem Katalysator versehen ist. Der Ringspalt kann eine Breite zwischen 2 und 20 mm aufweisen, je nach Art des eingesetzten Katalysators. Genannter Katalysator kann dabei auf verschiedene Katalysatorträger aufgebracht sein, alternativ dazu können die Rohrwände mit Katalysator beschichtet sein. Mögliche Katalysatorträger sind Schüttungen, zum Beispiel aus Kugeln, Zylindern, Hohlzylindern usw. oder anderweitige Träger aus gewellten oder glatten Blechen, metallischen oder keramischen Schäumen, Wabenkörpern, Gestricken, Geweben oder Gitterstrukturen bestehen. Dabei ist als Katalysator ein für die Reformierreaktion aktives Edelmetall, vorzugsweise Rhodium, zu wählen.

Der ersten Zone konzentrisch angeschlossen ist eine zweite Reformierzone, welche ebenfalls aus einer Anordnung von genannten Reformerdoppelrohren besteht. Die Anzahl von Rohren der zweiten Reformierzone kann zwischen fünf und 30 variieren. Die Länge der Einzelrohre und die Anzahl von Rohren in der jeweiligen Zone bestimmen das potentielle Volumen, welches mit Katalysator gefüllt werden kann. Die beiden Zonen werden nacheinander mit dem zu reformierenden Gas durchströmt, wobei die Rohre einer Zone jeweils parallel durchströmt werden. Es ist aber auch eine separate Durchströmung der jeweiligen Reformerrohre einer Zone denkbar. Auch eine gruppenweise Verschaltung der einzelnen Rohre kann vorgenommen werden. Je mehr Gas allerdings durch ein einzelnes Rohr strömen muss, desto höher ist auch der Druckverlust der Anlage und desto höher ist der Energieaufwand zur Erzeugung des Drucks.

Genannte Reformerdoppelrohre sind auf einer Grundplatte aufgebracht und sind von dieser Grundplatte aus für Prozessgase zugänglich gemacht. Rauchgase können nicht ins Innere der Reformerdoppelrohre gelangen. Unterhalb genannter Grundplatte sind in einem ersten Ausführungsbeispiel Sammelbehälter (Sammler) angebracht, welche die Prozessgase auf die einzelnen Reformerdoppelrohre verteilen bzw. von diesen sammeln. In einem Beispiel wird Prozessgas zuerst auf die Innenrohre der ersten Reformierzone verteilt, in welchen es nach oben strömt. Danach durchströmt das Prozessgas den Ringspalt in entgegengesetzter Richtung und wird über den Katalysator der ersten Reformierzone geleitet und teilweise reformiert. Ausströmendes Gas wird danach als Zwischengas bezeichnet, weil es bereits Wasserstoff, Kohlenmonoxid und Kohlendioxid enthält aber noch restliche Mengen an Methan aufweist. Aus der ersten Reformierzone ausströmendes Zwischengas wird in einem zweiten Zwischengassammler zusammengeführt und an die zweite Reaktionszone weitergeleitet. In einem Ausführungsbeispiel kann genanntes Gas zuerst auf die Ringspalte der zweiten Reformierzone geleitet werden, wo der restliche Umsatz der Dampfreformierung stattfindet. Abgeleitet wird das Synthesegas danach über die Innenröhrchen der zweiten Reformierzone.

Die Verschaltung der Reformierzonen kann in anderen Ausführungsbeispielen variiert werden. Beispielsweise kann die zweite weiter außen liegende Reformierzone auch zuerst durchströmt werden. Die interne Verschaltung der jeweiligen Reformierzonen kann ebenfalls variieren, um dadurch die Reformierung auf andere Temperaturniveaus zu führen oder fertigungstechnische Vorteile zu erzielen. Ebenfalls können in weiteren Ausführungsbeispielen die Reformierzonen als solche unterteilt werden, sodass einzelne durchströmt oder Gruppen von Reformerdoppelrohren zur gleichzeitigen Durchströmung verschaltet werden.

Die Wahl der Verschaltung der unterschiedlichen Reaktionszonen hängt ebenfalls von der Art der eingesetzten Katalysatoren ab. In einem bevorzugten Ausführungsbeispiel wird die erste Reaktionszone mit einem Edelmetallkatalysator bestückt, welcher nicht aktiviert werden muss. Die Aktivierung von oxidierten Katalysatoren geschieht in der Regel durch Reduktion mit Wasserstoff, welcher vor der ersten Inbetriebnahme des Reaktors eingeströmt werden muss. Bei Edelmetallkatalysatoren ist das nicht notwendig. Diese sind somit auch ohne vorherige Aktivierung gebrauchsfähig. Nachteil der Edelmetallkatalysatoren ist der hohe Anschaffungspreis, was sich auf die Gesamtkosten des Reformersystems auswirkt. Deshalb wird in der Erfindung in der zweiten Reaktionszone ein preiswerter Katalysator eingesetzt, welcher beispielsweise aus Nickel bestehen oder Nickel enthalten kann. Die Aktivierung geschieht in diesem Fall über den in der ersten Reformierzone entstehenden Wasserstoff automatisch. Eine Deaktivierung der Katalysatoren durch beispielsweise erhöhte Einbringung von Oxidationsmitteln kann damit im Betrieb unter Verwendung der eingesetzten Kohlenwasserstoffe wieder rückgängig gemacht werden.

Das aus den Reformierzonen austretende Produktgas beinhaltet gleichgewichtsbedingt zwischen fünf und 20 Vol.%. Bei der Anwendung dieses Gases in Brennstoffzellen, muss der Kohlenmonoxidgehalt auf definierte Werte reduziert werden. Bei Niedertemperatur-PEM-Brennstoffzellen liegt dieser Wert bei wenigen ppm Kohlenmonoxid im Synthesegas. Hochtemperatur-PEM-Systeme können Kohlenmonoxidgehalte bis zu 3 Vol.% tolerieren. Der Reformierzone angeschlossen ist deshalb eine weitere Reaktionszone. Diese beinhaltet ebenfalls zur Beschleunigung der chemischen Reaktion Katalysatoren, welche auf Schüttungen oder anderweitigen Trägermaterialen aufgebracht sein können. Shiftreaktoren werden bei Temperaturen zwischen 200 und 400 °C betrieben. Zur Erreichung der erforderlichen Reaktionstemperaturen muss das Synthesegas, welches aus den Reformierzonen austritt, abgekühlt werden. Dazu ist wiederum konzentrisch zur zweiten Reformierzone ein Bereich angeordnet, welcher als Ringspalt ausgebildet ist und eine Rohrwendel enthält. Die Rohrwendel kann wahlweise als Glattrohr, Wellrohr oder Lamellenrohr ausgebildet sein. Auch andere dem Wärmeübergang förderliche Anbauten am Rohr können verwendet werden. Synthesegas wird um die Wendel geleitet und strömt quer zu den Rohrreihen. Der Wärmeübertrag erfolgt auf das Medium im Inneren der Rohrwendel, welche aus vorgewärmten Prozessgasen besteht. Der Katalysator kann in einem Bereich des Ringspaltes eingebracht werden oder sich über den gesamten Ringspalt erstrecken. Die Art des Katalysators kann auch variiert werden und so in weiteren Ausführungsbeispielen auch Mischungen von Hochtemperatur- und Niedertemperaturshift oder Methanisierungskatalysatoren enthalten. Dadurch wird eine Zone geschaffen, in der der Kohlenmonoxidgehalt des Synthesegases auf geforderte Mindestmengen gesenkt wird. Die Temperatur des Synthesegases und Reaktionsbereichs der verwendeten Katalysatoren kann mit der Wärmeübertragerfläche der Rohrwendel beeinflusst werden. Weiterhin beeinflusst die Temperatur des in der Rohrwendel strömenden Mediums die Menge der übertragenen Wärme und damit die Abkühlung des Synthesegases. Das fertige Synthesegas wird über einen Sammelbehälter oder auch direkt in ein Anschlussrohr abgeleitet. Genannter Wärmeübertrager wird als Konditionierer bezeichnet, weil er das Synthesegas auf die erforderliche Temperatur konditioniert.

Der Konditionierer weist ein niedrigeres Temperaturniveau auf als die weiter innen liegende Reformierzone, wodurch sich ein Temperaturgefälle von einem inneren heißen Kern zu einer äußeren kühleren Schale ergibt. Zweckmäßig ist der Reformer mit einer hohlzylinderförmigen inneren Wärmedämmung ausgestattet, um parasitäre Wärmeströme zwischen den Reaktionsräumen zu unterbinden und die Wärme im Inneren des Reaktors zu halten. Eine kühlere äußere Schale hat den Vorteil, dass zum Einen weniger Außendämmung für den Apparat eingesetzt werden muss und somit kleinere Bauvolumina erforderlich sind. Zum Zweiten sind weniger Stahlteile in der heißen Zone angebracht, was Aufheizzeiten verringert und Brennstoff einspart, da weniger Masse erwärmt werden muss.

Koradial zur Konditioniererzone ist ein zweiter Bereich zur Wärmeübertragung vorgesehen, welcher auf ähnlichem Temperaturniveau betrieben wird. Zweiter Bereich besteht ebenfalls aus einem Ringspalt mit innen liegender Rohrwendel, aus Glattrohr oder zweckmäßig aus Wellrohr, Lamellenrohr oder Rohr, welches mit dem Wärmeübergang dienlichen Anbauten versehen ist. Der Wärmeübertrager dient zur Verdampfung und Vorwärmung der Produkte. Hierbei kann Produktgas zusammen oder getrennt von Wasser eingebracht werden. Auch bereits in einem Vorprozess erwärmtes und/oder (teil)-verdampftes Wasser kann in beschriebenen Wärmeübertrager eingebracht werden. Der von innen nach außen entstehende, thermisch schalenförmige Aufbau wird durch beschriebenen Wärmeübertrager vervollständigt, da die gesamte Außenhülle des Reformers von Funktionseinheiten gleicher, zum Kern hin höherer Temperaturniveaus gebildet wird.

Weiterer Bestandteil der Erfindung ist eine integrierte Brennereinheit zur Bereitstellung von Prozesswärme, welche in zuvor beschriebenem Reformer erforderlich ist. Genannte Brennereinheit ist im Zentrum der Reformereinheit angeordnet und bildet zusammen mit der ersten Reformierzone den heißen inneren Kern der Apparatur. Die Brennereinheit hat die Aufgabe, die erforderliche Prozesswärme bereitzustellen und alle im Prozess anfallenden gasförmigen und/oder flüssigen brennbaren Stoffe sicher umzusetzen. Die brennbaren Stoffe können dabei auch aus Stoffgemischen aus brennbaren und inerten Komponenten bestehen. Dabei sind besonders die unterschiedlichen Brenneigenschaften der Medien, insbesondere der spezifische Luftbedarf, spezifischer Heizwert und Flammengeschwindigkeiten zu beachten. Beispielsweise hat Wasserstoff eine wesentlich höhere Flammengeschwindigkeit als Methan aber einen niedrigeren spezifischen Heizwert und geringeren molaren Sauerstoffbedarf bei der Verbrennung. Bei der Betriebsweise des Brenners wird zwischen Gasen unterschieden, welche aus sicherheitstechnischen Aspekten bereits vor der Verbrennung mit Luft gemischt werden können (vormischbare Gase), und Solchen, welche erst im Verbrennungsraum mit Luft in Kontakt kommen können (nicht vormischbare Gase). Der Grund dafür liegt in der Höhe der Flammengeschwindigkeit einiger Gase, wenn dabei die Gefahr besteht, dass schnell brennende Gasgemische die Flamme ins Innere des Brenners tragen können. Dies würde einen unsicheren Betriebszustand darstellen und zu einer thermischen Schädigung des Brenners führen.

Zur Lösung der Aufgabe ist der Brenner aus mindestens zwei verschiedenen Zonen aufgebaut, welche sich dadurch unterscheiden, ob Verbrennungsluft bereits vor der Verbrennung teilweise oder ganz dem Gas beigemischt oder das Gas erst in der Verbrennungszone mit Luft gemischt wird. Dadurch kann verhindert werden, dass schnell brennendes Gase aus der Verbrennungszone in den Mischraum zurückbrennen und zur thermischen Schädigung des Brenners führen kann. Die Verbrennungszone kann als Oberflächenstrahlungszone, interne Verbrennungszone oder freie Verbrennungszone ausgeführt sein.

Der Brenner besteht aus einem ersten Gehäuse, welches an einer Seite einen Anschluss aufweist, in welchen Verbrennungsluft und vormischbare Gase oder Flüssigkeiten bzw. Dämpfe eingeleitet werden können. Die Einleitung der Verbrennungsluft und vormischbarer Gase oder Flüssigkeiten bzw. Dämpfe kann auch getrennt durch zwei oder mehrere Anschlüsse in das Gehäuse geschehen. Die Funktion des Gehäuses ist die homogene Vermischung der an der Verbrennung teilnehmenden Komponenten, damit eine saubere, rückstandsfreie Verbrennung garantiert werden kann. Weiterhin besteht der Brenner aus einem zweiten Gehäuse, welches bevorzugt im erstem Gehäuse angeordnet ist. Möglich ist aber auch die Anordnung um das erste Gehäuse. Zweites Gehäuse dient zur Verteilung von nicht-vormischbaren Gasen oder Flüssigkeiten bzw. Dämpfen in den Verbrennungsraum. Beide Gehäuse müssen untereinander vollkommen dicht sein, damit keine Verbrennungsluft mit nicht-vormischbaren Medien in Verbindung kommt, was ein Rückzünden aus der Verbrennungszone ins Innere des Brenners möglich machen würde. Dadurch könnte es zur thermischen Schädigung des Brennergehäuses und der angeschlossenen Armaturen kommen.

In einem bevorzugten Ausführungsbeispiel besteht die Verbrennungszone aus einer temperaturbeständigen, nichtbrennbaren Schicht, welche das Brennergehäuse thermisch von der Verbrennungszone entkoppelt. Durch Verbrennung des Brennstoffes mit Luftsauerstoff kommt es zur Bildung von heißem Rauchgas, welches zur Einbringung von Prozesswärme in den Reaktor dient. Die Wärmeübertragung erfolgt in dem Fall durch Konvektion. Bei verschiedenartiger Ausbildung der Verbrennungszone werden die umgebenden Wände bei der Verbrennung stark erhitzt. Dadurch kommt es ebenfalls zur Wärmeübertragung durch Strahlung in die Reaktionszone.

Die heißen Rauchgase werden nach der Verbrennungszone durch ein zylinderförmiges Strahlrohr zur ersten Reaktionszone geleitet, wo ein Wärmeübergang an die Reformerrohre stattfindet. Das Innere der Reformerrohre dient als Reaktionszone der Reformierreaktion und nimmt bei der Reaktion Wärme über die Wände der Reformerrohre auf. Genanntes Strahlrohr ist, wie alle Reformerrohre, am Boden der Grundplatte angebracht und besitzt am Übergang genügend große Öffnungen zum Ausleiten der Rauchgase in die zweite Reformierzone. Dort umströmt das Rauchgas ebenfalls die Reformerrohre der zweiten Reformierzone und gibt über die Rohrwände Wärme an die im Inneren der Rohre stattfindende Reaktion ab. Das Rauchgas kühlt sich auf dem Weg von der Verbrennungszone über die Reformierzonen ab.

Ein weiteres Ausführungsbeispiel des Reformers verbindet die Verbrennungszone mit Strahlungsrohr und erster Reformierzone, indem das Strahlungsrohr mit inerter oder aktiver poröser Füllung versehen ist, in der die Verbrennungsreaktion stabilisiert ist. Dadurch kann der Wärmeübergang zu den Reformierzonen verbessert werden.

Das in den Reformierzonen abgekühlte Rauchgas wird anschließend in beschriebenen Ringspalt-Wärmeübertrager geleitet, in welchem Wärme an das im Inneren einer Wendel strömende Prozessgas übertragen werden soll. Dadurch wird das Rauchgas weiter abgekühlt und Wärme prozessintern genutzt. Bei Verlassen des Wärmeübertragers hat das Rauchgas ein Temperaturniveau, welches nicht mehr im Reaktor eingesetzt werden kann. Deshalb verlässt das Rauchgas den Apparat über einen ringförmigen Sammelbehälter und kann zur weiteren Energieausbeute in einem Abgaswärmeübertrager zur Brennwertnutzung beispielsweise gegen Wasser eines Heizkreislaufes gekühlt werden. Es gibt allerdings auch andere Verwendungsmöglichkeiten der Restenergie des Rauchgases, abhängig vom Gesamtsystem, in welchem der Reformer eingesetzt werden soll.

Ein weiterer Vorteil der Erfindung ist das Heruntersetzen des Fertigungsaufwandes durch Verringerung der Anzahl und Länge von Schweißnähten und der guten Automatisierbarkeit der Fertigung. Der Apparat ist in seiner Komplexität der einzelnen Verfahrensschritte im Vergleich zu anderen aus der Literatur bekannten Reformern besonders im Hinblick auf einfache Fertigung und Energieeinsparung bei der Herstellung konzipiert. Dadurch eignet sich der Reformer in besonderem Maße für die Herstellung in größeren Stückzahlen.

Zum besseren Verständnis sollen im Weiteren die einzelnen Bauteile der Erfindung anhand von Zeichnungen und Funktionsskizzen eines Ausführungsbeispiels erläutert werden.

Die Erfindung besteht aus einem zylinderförmigen Reaktor (0.2) und einem aufgesetzten, wärmetechnisch integrierten Brenner (0.1). Die Bauteile des Reaktors werden von einer Wandung (30) eingefasst und gasdicht umschlossen. Der Reaktor (0.2) wird mit einer Wärmedämmung (29) nach Außen gedämmt. Die Prozessgase treten am Einlass (1) in den Reaktor ein und werden im Inneren einer Verdampferrohrwendel (4) erhitzt bzw. verdampft. Die dafür notwendige Wärme kommt von Rauchgas, welches in den Wärmeübertrager an Stelle (5) eingeleitet wird und zuvor bereits Wärme für die chemische Reaktion der Reformierung abgegeben hat. Im Wärmeübertrager wird das Rauchgas um die Verdampferrohrwendel geleitet (3). Am Ende des Wärmeübertragers verlässt das Rauchgas den Reaktor über eine Abführleitung (2) und wird zur Restwärmenutzung einem Brennwert-Abgaswärmeübertrager zugeführt.

Nach genanntem Verdampfer wird das Prozessgas in einen zweiten Wärmeübertrager geleitet und weiter erwärmt bzw. überhitzt. In zweitem Wärmeübertrager wird das Gas ebenfalls durch eine Rohrwendel (9) geleitet und nimmt Wärme aus dem im Gegenstrom fließenden Reformatgasstrom (10) auf. Das überhitzte Prozessgas wird über eine Zuführung (11) in den Eduktsammler (12) zur ersten Reformierzone (15) geleitet. In erster Reaktionszone fließ das Gas im Inneren von Reformerlanzen (14) und wird auf Reaktionstemperatur erwärmt. Am Ende der Reformerlanzen wird das Gas umgeleitet und strömt durch eine katalytisch aktive Schicht, welche die chemische Reaktion der Dampfreformierung anregt. In erster Reaktionszone geschieht eine Teilumsetzung der Prozessgase. Die gegen Oxidation unempfindlichen Edelmetallkatalysatoren der ersten Reaktionszone sind im Anfahrprozess der Anlage oder nach Stillstand jederzeit ohne Aktivierung einsetzbar und können einen Teilstrom an Wasserstoff erzeugen. Das Teilumgesetzte Prozessgas wird in einem Zwischengassammler (13) gesammelt und auf die Reformerlanzen der zweiten Reaktionszone (28) verteilt. Dort treten sie aus genanntem Sammler direkt in die katalytisch aktive Zone der Reformerlanzen ein und werden restlich umgesetzt. Am Ende der Reformerlanzen geschieht ebenfalls eine Umlenkung auf ein inneres Abführrohr jeder einzelnen Reformerlanze. Dabei strömt das Produktgas in den Lanzen nach unten und gibt Wäme an den weiter außen liegenden katalytisch aktiven Reaktionsbereich der Lanzen ab. Das Synthesegas wird nun in den Konditionierer-Wärmeübertrager geleitet, wo es im Außenbereich (10) der Rohrwendel (9) Wärme an das zu überhitzende Prozessgas überträgt.

Die zweite Reaktionszone (28) wird durch eine interne Wärmedämmung (6) thermisch von den weiter außen liegenden, kühleren Bereichen getrennt.

Nach Kühlung des Synthesegases wird eine weitere, katalytisch aktive Zone (8) durchströmt, in welcher der Kohlenmonoxidgehalt des Gases durch die Wassergasshift-Reaktion heruntergesetzt wird. Das an Kohlenmonoxid arme Synthesegas verlässt den Reformer durch Anschluss (7) und kann für nachfolgende Prozesse verwendet werden.

Zweiter Bestandteil der Erfindung ist ein Mehrstoffbrenner (0.1) zur sicheren Umsetzung von allen im Prozess anfallenden Gasen oder verdampften brennbaren Flüssigkeiten. Genannter Brenner besteht aus einem Gehäuse (22), in dem die Vermischung und Verteilung von Brennstoff und Luft vorgenommen wird. Zur Befestigung am Reformer ist ein Flansch (17) vorgesehen, der mit einer Dichtung versehen die Brennraumatmosphäre von der Umgebung sicher trennt. Der Brennraum wird gebildet von einer Brennerplatte (24) und einem im Reformer installierten Strahlrohr (16). Die Brennerplatte ist mit Bohrungen (25) versehen, in welche Röhrchen (26) mit kleinerem Durchmesser eingebracht sind, sodass sich ein Ringspalt zwischen Bohrung und Röhrchen ergibt. Vormischbare Gase werden in die Einlassöffnung (18) eingeleitet und mischen sich im Mischraum (23) mit der in die Einlassöffnung (20) eingebrachten Luft zu einem homogenen Luft-Brennstoffgemisch. Durch den Ringspalt (25) der Brennerplatte wird das Gas in den Brennraum eingebracht und gezündet. Nicht vormischbare Gase werden durch Einlassöffnung (19) in einen Sammelbehälter (21) geleitet und von dort auf die Röhrchen (26) der Brennerplatte verteilt. Dadurch gelangt auch dieser Brennstoff in den Brennraum (31), wo er zusammen mit Luftsauerstoff thermisch umgesetzt wird. Im Brennraum befinden sich handelsübliche Einrichtungen zur Zündung und Flammenüberwachung.

Rauchgas wird vom Brennraum (31) über die Reformerlanzen (15) der ersten Reaktionszone geleitet und stellt dort Wärme für die Reaktion bereit. Am Boden der Reaktionszone sind Spalte vorgesehen, durch die das Rauchgas in die zweite Reaktionszone (28) geleitet wird. Dort wird dem Rauchgas ebenfalls Wärme durch Konvektion entzogen und der Dampfreformierung zur Verfügung gestellt. Am Ende der zweiten Reaktionszone (28) wird das Rauchgas über Spalte (5) in den Verdampfer-Wärmeübertrager geleitet und gibt im Außenbereich (3) von Rohrwendel (4) weiter Wärme ab. Das Rauchgas verlässt den Reformer durch Auslassöffnung (2) und steht zur weiteren externen Nutzung zum Beispiel in einem kondensierenden Abgaswärmetauscher zur Verfügung.

Bezugszeichenliste

| | | |
|---|---|---|
| 0.1 | Mehrstoffbrenner | |
| 0.2 | Reformer | |
| 1 | Prozessgaseinlass | |
| 2 | Abführleitung Rauchgas | |
| 3 | Zwischenraum Verdampferrohrwendel | |
| 4 | Verdampferrohrwendel | |
| 5 | Einlass Rauchgas Verdampferrohrwendel | |
| 6 | Interne Wärmedämmung | |
| 7 | Synthesegasauslass | |
| 8 | CO-Shift | |
| 9 | Konditioniererrohrwendel | |
| 10 | Zwischenraum Konditioniererrohrwendel | |
| 11 | Zuführung Prozessgas | |
| 12 | Eduktsammler | |
| 13 | Zwischengassammler | |
| 14 | Zuführungs- oder Abführungsleitung Reformierzone | |
| 15 | Erste Reformierzone | |

(fortgesetzt)

| 16 | Strahlrohr |
|---|---|
| 17 | Brennerflansch |
| 18 | Einlass vormischbare Gase |
| 19 | Einlass nicht-vormischbare Gase |
| 20 | Einlass Oxidationsmittel |
| 21 | Sammel- und Verteilbehälter nicht-vormischbare Gase |
| 22 | Brennergehäuse |
| 23 | Mischraum |
| 24 | Brennerplatte |
| 25 | Ringspalt (Bohrung) Brennerplatte |
| 26 | Verteilerröhrchen |
| 27 | Brennraum |
| 28 | Zweite Reaktionszone |
| 29 | Äußere Wärmedämmung |
| 30 | Reformerwand |

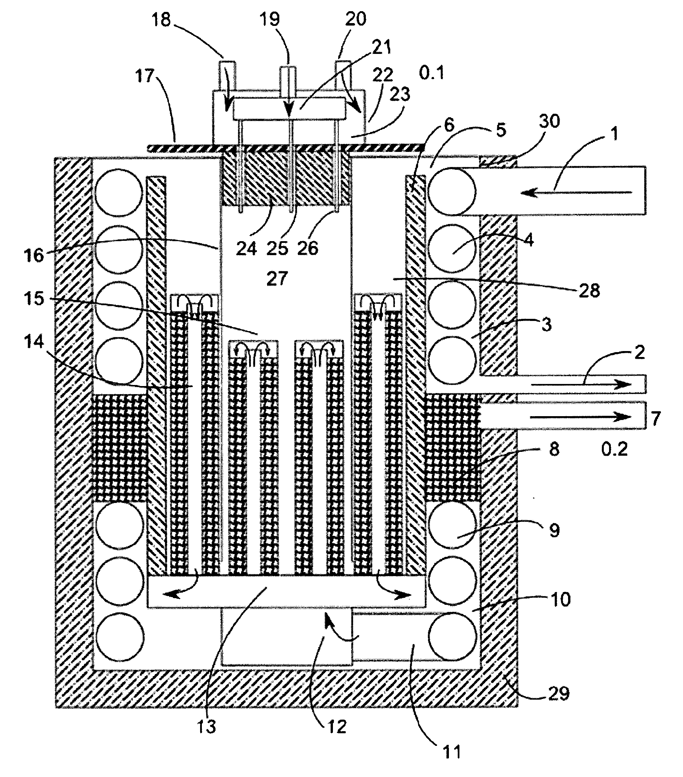

**Patentansprüche**

1. Verfahren und kompakte Anordnung zur Erzeugung von wasserstoffreichen Gasgemischen aus Kohlenwasserstoffen (0.2) bestehend aus

    a. einem vorzugsweise brennerbeheiztem Reformierreaktor und Gehäuse (30),
    b. einer äußeren Wärmedämmung (29),
    c. einer inneren Wärmedämmung (6),
    d. einer ersten inneren Reaktionszone (15) mit Reformerlanzen,
    e. einer zweiten äußeren Reaktionszone (28) mit Reformerlanzen,
    f. einer inneren Brennraumzone (31) mit einem Strahlrohr (16),
    g. weiter außen liegendem Verdampfer-Wärmeübertrager (4),
    h. fluchtend dazu angelegtem Konditionierer-Wärmeübertrager (9) und
    i. vorzugsweise im Außenbereich installierter Shift-Reaktionszone (8),

    **gekennzeichnet dadurch, dass** es einen schalenförmigen Aufbau gibt, welcher bewirkt, dass die Temperaturen nach außen hin abnehmen, sodass im Kern des Reaktors die höchsten Temperaturen, durch den Prozess der Verbrennung und Reformierung, und am Rand die niedrigsten Temperaturen vorherrschen und die Anordnung eine innere Wärmedämmung aufweist, sodass heiße Bereiche des Reaktors von Kühleren getrennt werden und die Reformierreaktion in Doppelrohrlanzen stattfindet, wobei der Reaktionsbereich in zwei Zonen, welche nacheinander durchströmt werden, aufgeteilt ist.

2. Anordnung nach Anspruch 1, **dadurch gekennzeichnet, dass** der Innenraum der Lanzen mit einer katalytisch aktiven Schicht oder katalytisch aktiven Füllung versehen ist und die Zu- oder Abführung der Prozessgase zu diesen katalytisch aktiven Schichten oder Füllungen über Innenrohre geschieht, welche in den Lanzen eingebracht sind.

3. Verfahren und Anordnung nach Anspruch 2, **dadurch gekennzeichnet, dass** ein erster Reformierbereich mit Edelmetallkatalysatoren, vorzugsweise Rhodium, bestückt ist.

4. Verfahren und Anordnung nach Anspruch 1, **dadurch gekennzeichnet, dass** in einer äußeren Schale ein Wärmeübertrager zum Zwecke der Prozessgasverdampfung und -vorwärmung angeordnet ist und dieser als Rohrwendel ausgeführt ist, in der das Gas geleitet wird und um welche heiße Abgase aus einem Verbrennungsprozess strömen.

5. Verfahren und Anordnung nach Anspruch 1, **dadurch gekennzeichnet, dass** in einer äußeren Schale ein Wärmeübertrager zum Zwecke der Prozessgasüberhitzung angeordnet ist und dieser als Rohrwendel ausgeführt ist, in welcher Prozessgas geleitet wird und um welche zu kühlendes Synthesegas aus der Reformierung strömt.

6. Anordnung nach Ansprüche 1, **dadurch gekennzeichnet, dass** im Außenbereich des Reformers eine oder mehrere katalytisch aktive Zonen angeordnet sind, welche zum Zwecke der Kohlenmonoxid-Reduzierung mit Synthesegas durchströmt werden.

7.  Verfahren und Anordnung eines Mehrstoffbrenners zur sicheren thermischen Umsetzung von kohlenwasserstoff- und wasserstoffhaltigen Gasen (0.1) bestehend aus

   a. einem Gehäuse (22),
   b. mindestens einem Einlass für Oxidationsmittel (18),
   c. mindestens einem Einlass für vormischbaren Brennstoff wie beispielsweise Erdgas oder Biogas (20),
   d. mindestens einem Einlass für nicht vormischbare Gase wie beispielsweise Wasserstoff (19),
   e. einer Brennerplatte mit guten thermischen Dämmeigenschaften (24),
   f. mehrere Zuführröhrchen durch die Brennerplatte (26),
   g. mindestens einer Mischkammer zum Mischen von Brennstoff und Oxidationsmittel (23) und
   h. einem Verteilbehälter für die Verteilung von Brennstoff auf die Zuführröhrchen (21)

   **gekennzeichnet dadurch, dass** schnell brennende Gase wie beispielsweise Wasserstoff getrennt vom Oxidationsmittel und langsam brennende Gase wie beispielsweise Kohlenwasserstoffe in einer Mischung mit Oxidationsmittel in den Brennraum eingebracht werden und die Umschaltung zwischen verschiedenartigen Brennstoffen derart geschieht, dass keine Verzögerungen im Betrieb auftreten und ohne Unterbrechung eine Flamme ausgebildet wird, wodurch auch spontan auftretende Gase im Prozess sicher mit dem Verfahren und der Anordnung umgesetzt werden können, weshalb ein Einsatz von Nachbrennern erspart werden kann.

8.  Verfahren nach Anspruch 7, **dadurch gekennzeichnet, dass** bei der Umschaltung zwischen verschiedenartigen Gasen zuerst die Menge des im Einsatz befindlichen Gases begrenzt gehalten wird und gleichzeitig die Menge an Oxidationsmittel adäquat erhöht wird, sodass immer noch eine sichere Verbrennung gewährleistet werden kann und anschließend ein zweites Gas in dem Maße hinzugefügt wird, dass die Verbrennung noch in sicherem Maße gewährleistet wird, sodass daraufhin das primäre Gas weiter gedrosselt werden kann und mit einer letztendlichen Anpassung des Volumenstroms an Oxidationsmittel die Verbrennung im angestrebten Verbrennungsluftverhältnis abläuft.

9.  Anordnung nach Anspruch 8, **dadurch gekennzeichnet, dass** zur Unterstützung des Regelprozesses das Verbrennungsluftverhältnis mit einer geeigneten Sonde überwacht werden kann.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004010910 B4
- DE 102006019409 A1
- US 6759016 B2
- WO 03024867 A1
- DE 19721630